# FASCICULE DE BREVET EUROPEEN

(11) **EP 4 601 948 B1**
(45) Date de publication et mention de la délivrance du brevet: **30.09.2026**
(21) Numéro de dépôt: 23801820.4
(22) Date de dépôt: 11.10.2023
(51) Int. Cl.: B64D 29/06

(54) **SYSTÈME À VERROU POUR NACELLE DE TURBOMACHINE ET NACELLE LE COMPORTANT**
VERRIEGELUNGSSYSTEM FÜR TURBINENTRIEBWERKSGONDEL UND GONDEL DAMIT
LOCK SYSTEM FOR TURBINE ENGINE NACELLE AND NACELLE INCLUDING SAME

(30) Priorité: 13.10.2022 FR 2210506
(43) Date de publication de la demande: 20.08.2025
(73) Titulaire: Safran Nacelles, 76700 Gonfreville-l'Orcher (FR)
(72) Inventeur: AVENEL, Philippe, 77550 MOISSY-CRAMAYEL (FR); PELLERIN, Pierre, 77550 MOISSY-CRAMAYEL (FR)
(74) Mandataire: Gevers & Orès
(86) Numéro de dépôt international: PCT/FR2023/051581
(87) Numéro de publication internationale: WO 2024/079423

(56) Documents cités:
- EP-A2- 1 927 711
- US-A- 4 116 479
- US-A1- 2015 184 544
- US-B2- 10 392 830

## Description

### DOMAINE TECHNIQUE

La présente invention concerne un système à verrou pour nacelle de turbomachine, notamment de turbomachine d'aéronef, et une nacelle équipée d'un tel système à verrou comportant un premier capot et un deuxième capot. Le système à verrou est conformé pour verrouiller les capots en position fermée lorsqu'il occupe une configuration de verrouillage et pour permettre l'ouverture des capots lorsqu'il occupe une configuration de déverrouillage.

### TECHNIQUE ANTÉRIEURE

Les ensembles de motorisation pour les aéronefs comportent généralement une nacelle formant une enveloppe extérieure globalement annulaire logeant à l'intérieur une turbomachine disposée suivant l'axe longitudinal de cette nacelle. La turbomachine reçoit de l'air frais venant du côté amont, et rejette du côté aval les gaz chauds issus de la combustion du carburant, qui donnent une certaine poussée.

Une turbomachine d'aéronef, comprend, généralement, d'amont en aval, une soufflante et plusieurs modules tels qu'un compresseur basse pression suivi d'un compresseur haute pression, une chambre de combustion, une turbine haute pression suivie d'une turbine basse pression, qui entraînent le compresseur basse ou haute pression correspondant, et un système d'éjection des gaz. L'amont et l'aval sont définis par rapport au sens d'écoulement normal du gaz dans une veine d'écoulement (de l'amont vers l'aval).

Dans le cas des turbomachines à double flux, les corps haute et basse pression sont traversés par un flux d'air primaire et la soufflante produit un flux d'air secondaire qui circule dans la turbomachine, entre un carter et une nacelle ou enveloppe externe de la turbomachine, dans un canal de flux froid. En sortie de la tuyère, les gaz issus du flux primaire sont mélangés au flux secondaire pour produire une force de propulsion, le flux secondaire fournissant ici la majorité de la poussée en fonctionnement normal donnant un jet direct.

Certaines nacelles comportent un système d'inversion de poussée qui ferme au moins en partie la veine annulaire d'air froid, et rejette le flux secondaire vers l'avant en formant un jet inversé qui génère une contre-poussée de freinage de l'aéronef. Un type de nacelle connu comporte deux demi-capots ou capots recouvrant la section médiane entourant la soufflante de flux secondaire reliés l'un à l'autre par une charnière disposant d'un axe longitudinal situé en partie supérieure, de manière à permettre une ouverture des parties inférieures de ces capots pour des opérations de maintenance.

Les capots sont maintenus en position fermée, en partie inférieure de manière générale, par des verrous qui réalisent un serrage tangentiel entre ces deux capots.

De façon connue, ces verrous comportent un crochet et une boucle chacun fixé à un des capots. Dans une configuration de verrouillage des verrous, le crochet coopère à retenue avec la boucle dans une position fermée des capots. Dans une position de déverrouillage des verrous, le crochet est dégagé de la boucle et autorise une ouverture des capots. Les verrous sont généralement actionnés manuellement par une poignée de commande. Les efforts nécessaires au verrouillage ou au déverrouillage du verrou sont parfois difficiles à réaliser surtout lorsque ces verrous sont positionnés à proximité du sol.

De plus, lorsqu'ils sont positionnés en externe de la nacelle, les verrous et/ou la poignée de commande créent des défauts aérodynamiques.

En outre, les verrous actuels ont une capacité de rapprochement (également appelée « take-up » en anglais) des deux capots limitée par l'utilisation de la poignée de commande et la présence d'un trou oblong usiné dans le crochet nécessitant de rallonger ce dernier pour augmenter cette capacité de rapprochement. Toutefois, cela engendre une augmentation considérable de la masse du verrou. Il est également connu de modifier les positions des points de pivots des biellettes afin d'éviter la présence d'un trou oblong. Toutefois, cette solution nécessite l'allongement des biellettes pour augmenter la capacité de rapprochement.

Les verrous actuels présentent en outre l'inconvénient d'être peu sécurisés puisqu'ils peuvent être ouverts sans outillage particulier si les poignées de commande ne sont pas équipées de clef de verrouillage.

Enfin, de manière générale, les verrous classiques ne comportent pas de témoin de verrouillage visible de loin à l'extérieur de la nacelle. En effet, dans les verrous classiques, seule la poignée de commande pendant par gravité en dehors des surfaces aérodynamiques des capots permet d'alerter un opérateur sur le non verrouillage du verrou des capots.

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi ceux actuellement en circulation nécessitant de devoir mettre en œuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des impacts environnementaux modérés dans un but d'amélioration de l'efficacité énergétique des avions.

Par voie de conséquence, la Déposante travaille en permanence à la réduction de son impact climatique par l'emploi de méthodes et l'exploitation de procédés de développement et de fabrication vertueux et minimisant les émissions de gaz à effet de serre au minimum possible pour réduire l'empreinte environnementale de son activité. Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

L'objectif de la présente invention est ainsi de proposer un système de verrou pour nacelle permettant de palier à au moins certains de ces inconvénients de la technique antérieure, en particulier sans ajouter de masse. Le document US 10 392 830 B2 décrit un mécanisme de verrouillage pour une nacelle d'avion comprenant, un assemblage de poignée à crochet comprenant un élément à crochet, une poignée, et un agencement de liaison couplé entre l'élément à crochet et la poignée, la poignée étant adaptée pour commander le mouvement de l'élément à crochet lors du déverrouillage et du verrouillage du mécanisme de verrouillage; une manille ayant un récepteur d'extrémité de crochet et une portion de couplage espacée du récepteur d'extrémité de crochet de manière à définir au moins en partie une ouverture entre eux, le récepteur d'extrémité de crochet étant configuré pour engager une extrémité de crochet de l'élément à crochet lorsque la poignée se déplace d'une position d'ouverture s'écartant de la manille vers une position de fermeture s'étendant vers la manille; ledit mécanisme de verrouillage comprenant en outre un verrou de détection de manille placé sur la poignée, le verrou de détection de manille comprenant un bloc couplé à la poignée, un cylindre de verrouillage reçu dans le bloc, un agencement à gorge couplé entre le cylindre de verrouillage et le bloc et configuré pour commander la rotation du cylindre de verrouillage par rapport au bloc, et un élément d'interférence couplé au cylindre de verrouillage pour tourner avec le cylindre de verrouillage par rapport au bloc, l'élément d'interférence est configuré pour traverser l'ouverture de la manille dans une position déverrouillée et engager une face inférieure de la manille et pour bloquer le mouvement de la poignée par rapport à la manille dans une position verrouillée, le cylindre de verrouillage étant configuré pour commander la rotation de l'élément d'interférence; et un dispositif ayant une tête, un axe couplé à la tête, et une protubérance s'écartant de l'axe, l'axe étant configuré pour être reçu dans le cylindre de verrouillage pour engager l'agencement à gorge pour permettre la rotation du cylindre de verrouillage, la protubérance étant configurée pour engager la poignée pour piéger l'axe dans le cylindre de verrouillage lorsque le cylindre de verrouillage est dans la position déverrouillée, et la tête étant configurée pour s'écarter de la poignée pour fournir une indication d'un état déverrouillé du verrou de détection de manille.

### RÉSUMÉ DE L'INVENTION

À cet effet, l'invention concerne un système à verrou pour nacelle de turbomachine comprenant un premier et un deuxième capots, le système à verrou comprenant :
- un support destiné à être fixé au premier capot et supportant un crochet dit crochet principal ;
- un verrou à trois points destiné à être fixé au deuxième capot, comportant un support, un étrier solidaire du support et un mécanisme à trois points articulé en un point du support, le mécanisme à trois points étant mobile entre une position de verrouillage dans laquelle le crochet coopère à retenue avec l'étrier dans une position fermée des capots et une position de déverrouillage dans laquelle le crochet est dégagé de l'étrier et autorise une ouverture des capots ; et
- une poignée d'actionnement du mécanisme à trois points entre les positions de verrouillage et de déverrouillage, la poignée d'actionnement ayant une première extrémité reliée au mécanisme à trois points.

Selon l'invention, la poignée d'actionnement comporte une douille de verrouillage solidaire d'une deuxième extrémité opposée à la première extrémité, la douille étant montée pivotante par rapport au support du verrou à trois points entre une première position extrême lorsque le mécanisme à trois points est dans la position de verrouillage et une deuxième position extrême lorsque le mécanisme à trois points est dans la position de déverrouillage.

Selon l'invention, le système à verrou comporte également un outil de blocage adapté pour coopérer avec la douille de verrouillage et configuré pour manœuvrer la douille de verrouillage entre une position de blocage et une position de déblocage lorsque la douille de verrouillage est en première position extrême, et pour interdire une manœuvre de la poignée d'actionnement tant que la douille de verrouillage est dans sa position de blocage.

Ainsi, l'invention permet de réaliser un verrouillage sous tension mécanique à l'aide d'un outil de blocage particulier pour une fermeture plus aisée que pour les systèmes à verrous conventionnels. En effet, les efforts pour le verrouillage sont exercés à l'aide d'un outil ayant une poignée plus longue réduisant l'effort à produire. La longueur de la poignée peut en outre autoriser une pré-charge du crochet plus importante.

En outre, le verrouillage par un outil de blocage venant faire basculer le verrou 3 points permet de diminuer l'impact sur la surface aérodynamique externe des capots améliorant grandement la performance par rapport aux verrous actuels qui nécessitent des jeux induisant des décrochés et/ou des espaces autour des poignées.

Selon un mode de réalisation particulier de l'invention, l'invention permet d'intégrer une fonction de témoin de verrouillage, par exemple un fanion visible de loin qui ne peut être retirer que si les verrous sont parfaitement fermés.

Selon un autre mode de réalisation compatible avec le précédent, le système à verrou selon l'invention comporte un système de rapprochement configuré pour rapprocher le deuxième capot par rapport au premier capot pour la fermeture des capots.

Le système à verrou selon l'invention peut comprendre une ou plusieurs des caractéristiques suivantes, prises isolément les unes des autres ou en combinaison les unes avec les autres selon toutes les combinaisons techniquement possibles :
- l'outil de blocage comporte une tête de couplage agencée à une extrémité d'une tige, la tête de couplage et la douille de verrouillage étant conformées pour s'accoupler l'une à l'autre tant que la douille de verrouillage n'est pas dans sa position de blocage et pour se désolidariser l'un de l'autre lorsque la douille de verrouillage est dans sa première position extrême ;
- l'outil de blocage forme une partie mâle d'un accouplement à baïonnette et la douille de verrouillage forme une partie femelle de l'accouplement à baïonnette ;
- l'outil de blocage comporte un témoin de verrouillage visible en dehors de la nacelle tant que la tête de couplage et la douille de verrouillage sont accouplées l'une à l'autre ;
- la douille de verrouillage comporte un corps cylindrique et un téton de verrouillage s'étendant radialement à partir du corps cylindrique, le téton de verrouillage est configuré pour maintenir le crochet engagé dans l'étrier quand la douille de verrouillage est en position de blocage ;
- le système à verrou comprend un système de rapprochement configuré pour rapprocher le deuxième capot par rapport au premier capot pour la fermeture des capots ;
- le système de rapprochement comporte un coulisseau à crémaillère mobile en translation par rapport au support du crochet en direction du deuxième capot, au moins un crochet auxiliaire arrangé sur le coulisseau à crémaillère et configuré pour coopérer à retenue avec l'étrier pendant le rapprochement des capots, et un pignon de commande configuré pour engrener avec la crémaillère du coulisseau à crémaillère entrainant la translation de celui-ci entre une position avancée dans laquelle les capots sont éloignés l'un de l'autre et une position reculée dans laquelle les capots sont rapprochés l'un de l'autre autorisant une position fermée des capots ;
- le système de rapprochement comporte deux crochets auxiliaires agencés de part et d'autre du crochet principal ;
- le pignon de commande est manœuvrable manuellement ;
- le pignon de commande est manœuvrable par un moteur électrique ;
- le support du crochet comporte une platine conformée pour s'étendre dans un plan transversal au crochet, la platine comportant un orifice traversant conformé pour recevoir l'outil de blocage, l'orifice traversant étant conformé pour autoriser le retrait de l'outil de blocage uniquement lorsque la douille de verrouillage est dans sa position de blocage.

L'invention concerne également une nacelle de turbomachine comprenant un premier capot, un deuxième capot, et un système à verrou selon l'invention et tel que décrit ci-avant, le support supportant le crochet étant fixé au premier capot et le verrou type mécanisme à trois points étant fixé au deuxième capot, le système à verrou étant conformé pour verrouiller les capots en position fermée lorsqu'il occupe une configuration de verrouillage et pour permettre l'ouverture des capots lorsqu'il occupe une configuration de déverrouillage.

L'invention concerne également une turbomachine comportant au moins une nacelle selon l'invention et telle que décrite précédemment.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- La figure 1 est une vue schématique d'ensemble en coupe axiale d'une nacelle de turbomachine ;
- La figure 2 est une vue schématique en perspective d'un système à verrou selon l'invention ;
- La figure 3 est une vue schématique en coupe d'une partie d'un système à verrou de la figure 2 relative à verrou à trois points dans une position verrouillée ;
- La figure 4 est une vue schématique en coupe d'une partie d'un système à verrou de la figure 2 relative à verrou à trois points dans une position déverrouillée ;
- La figure 5 est une vue schématique en transparence partielle d'une douille de verrouillage équipant le verrou à trois points des figures 3 et 4 ;
- La figure 6 est une vue schématique agrandie d'un crochet du système à verrou de la figure 2 en position verrouillée et bloquée ;
- La figure 7 illustre une vue schématique en perspective d'un coulisseau à crémaillère équipant le système à verrou de la figure 2 ;
- La figure 8 est une vue schématique d'une autre partie d'un système à verrou de la figure 2 relative au crochet lorsque le coulisseau de la figure 7 est en position avancée ;
- La figure 9 est une vue schématique de la partie d'un système à verrou de la figure 8 lorsque le coulisseau est en position reculée ;
- La figure 10 est une vue de dessous de la partie d'un système à verrou des figures 8 et 9 ;
- La figure 11 illustre le système à verrou en position déverrouillée et les capots ouverts, le coulisseau de la figure 7 étant en position avancée ;
- La figure 12 illustre une phase de rapprochement des capots en vue de leur fermeture et du verrouillage du système à verrou ;
- La figure 13 représente le système à verrou en fin de phase de rapprochement, le système à verrou étant prêt à être verrouillé, le coulisseau de la figure 7 étant en position rétractée ;
- La figure 14 illustre le système à verrou après son verrouillage et avant l'extraction de l'outillage ;
- La figure 15 représente le système à verrou après avoir bloqué la douille de verrouillage et retiré l'outil de blocage ;
- La figure 16 représente une vue agrandie de l'outil de blocage en cours de verrouillage ; et
- La figure 17 représente une vue agrandie de l'outil de blocage en cours de blocage. Les éléments ayant les mêmes fonctions dans les différentes mises en œuvre ont les mêmes références dans les figures.

### DESCRIPTION DES MODES DE RÉALISATION

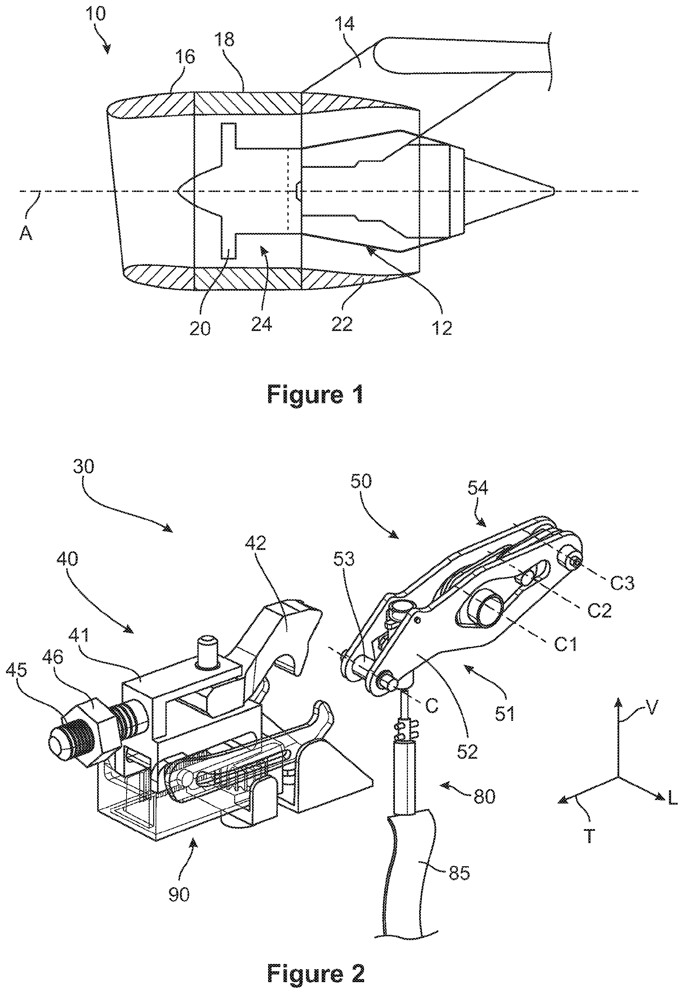

La figure 1 présente une nacelle 10 contenant une turbomachine 12 supporté par un pylône 14 fixé sous l'aile d'un aéronef. La nacelle 10 comporte une section avant 16 comprenant une entrée d'air profilée, une section centrale 18 entourant la soufflante d'air froid 20, et une section arrière 22 comprenant un inverseur de poussée, par exemple à grilles ou à portes. La nacelle 10 forme un profilage externe de la veine annulaire 24 guidant le flux d'air froid, et un carénage extérieur aérodynamique.

La nacelle 10 a un axe longitudinal A et présente une forme annulaire autour de cet axe. La section centrale 18 de la nacelle comporte deux capots de recouvrement extérieur, par exemple des capots de soufflante, disposés de manière symétrique par rapport à un plan axial vertical, qui peuvent s'ouvrir latéralement en pivotant autour d'une charnière comprenant un axe longitudinal disposé en partie supérieure et parallèle à l'axe longitudinal A de la nacelle 10.

La section arrière 22 comporte deux parties latérales arrière, qui se referment l'une sur l'autre suivant le même plan de symétrie axiale.

L'invention s'applique à toute nacelle d'une turbomachine comportant deux capots ou deux parties latérales arrière pouvant s'ouvrir et se fermer l'un sur l'autre, et notamment à la nacelle illustrée sur la figure 1. Notamment, ces deux capots peuvent être des capots de soufflante ou des capots d'inverseur qui coulissent vers l'arrière lors d'une phase d'inversion de poussée.

Notamment, ces capots et/ou ces parties arrière se ferment en se raccordant suivant un plan de symétrie P. Les deux capots notés par la suite 26, 28 sont serrés l'un contre l'autre suivant une direction tangentielle notée T, par au moins un système à verrou 30 selon l'invention et tel qu'il va être décrit en détails en regard des figures 2 à 17.

La figure 2 représente un tel système à verrou 30 en perspective.

Dans la suite de la description, on adoptera à titre non limitatif la terminologie longitudinal, vertical et transversal en référence au trièdre L, V, T indiqué sur les figures 2 à 17. La direction longitudinale L correspond sensiblement à l'axe longitudinal de la nacelle lorsque le système à verrou est installé sur celle-ci.

Le système à verrou 30 est conformé pour verrouiller le premier capot 26 et le deuxième capot 28 en position fermée lorsqu'il occupe une configuration de verrouillage et pour permettre l'ouverture des capots lorsqu'il occupe une configuration de déverrouillage.

Le système à verrou 30 comporte deux parties destinées chacune à être fixée à un des capots : une première partie 40 destinée à être fixée au premier capot 26 et une deuxième partie 50 destinée à être fixée au deuxième capot 28.

La première partie 40 comporte un support 41 destiné à être fixé au premier capot 26 et un crochet 42 dit crochet principal supporté par le support 41.

Dans l'exemple illustré notamment sur les figures 2 et 11 à 15, le support 41 de la première partie 40 est fixé au premier capot 26 par un système de fixation de type vis 45-écrou 46 . Avantageusement, grâce à ce système de fixation de type vis-écrou, il est possible de modifier la précharge du mécanisme de verrouillage du système à verrou 30 par exemple au moyen de perçages sur la surface de l'écrou en appui contre une portion du premier capot 26. De manière connue, ces perçages forment des positions d'indentation pour modifier la précharge et assurer un non déréglage du système à verrou une fois sous tension.

La deuxième partie 50 comporte un verrou dit verrou à trois points 51 destiné à être fixé au deuxième capot 28. Le verrou à trois points 51 comporte un support 52, un étrier 53 (également appelé boucle 53) solidaire du support 52 et un mécanisme à trois points 54. Le support 52 comporte de préférence deux parois latérales parallèles et solidaires l'une de l'autre, les parois s'étendant dans des plans transversaux, c'est-à-dire s'étendant selon les directions V et T indiquées sur les figures 2 à 17.

L'étrier 53 présente un axe C de prise du crochet 42 qui s'étend selon la direction longitudinale L. La boucle 53 est arrangée entre les deux parois du support 52 à une première extrémité 52A de celui-ci.

Le mécanisme à trois points 54 est également logé entre les deux parois latérales du support 52 à une deuxième extrémité 52B de celui-ci opposée à la première extrémité 52A. Il est articulé par rapport au support 52 du verrou à trois points. A cet effet, le mécanisme 54 comporte deux biellettes articulées l'une par rapport à l'autre :
- une première biellette 55 dont une première extrémité 55A est montée de manière libre en rotation autour d'un axe de rotation C1 et une deuxième extrémité 55B est montée également rotative autour d'un axe de rotation C2, et
- une deuxième biellette 56 dont une première extrémité 56A est montée de manière libre en rotation autour de l'axe de rotation C2 et une deuxième extrémité 56B est montée également rotative autour d'un axe de rotation C3.

Les axes de rotation C1, C2 et C3 sont parallèles les uns aux autres et parallèles à l'axe C de prise du crochet 42. L'axe C1 est également appelé axe principal du verrou et solidaire du deuxième capot 26. L'axe C2 est l'axe de liaison entre les deux biellettes 55, 56 du mécanisme à trois points 54.

Ainsi, l'ensemble des biellettes 55, 56 du mécanisme à trois points 54 est logé entre les deux parois latérales du support 52.

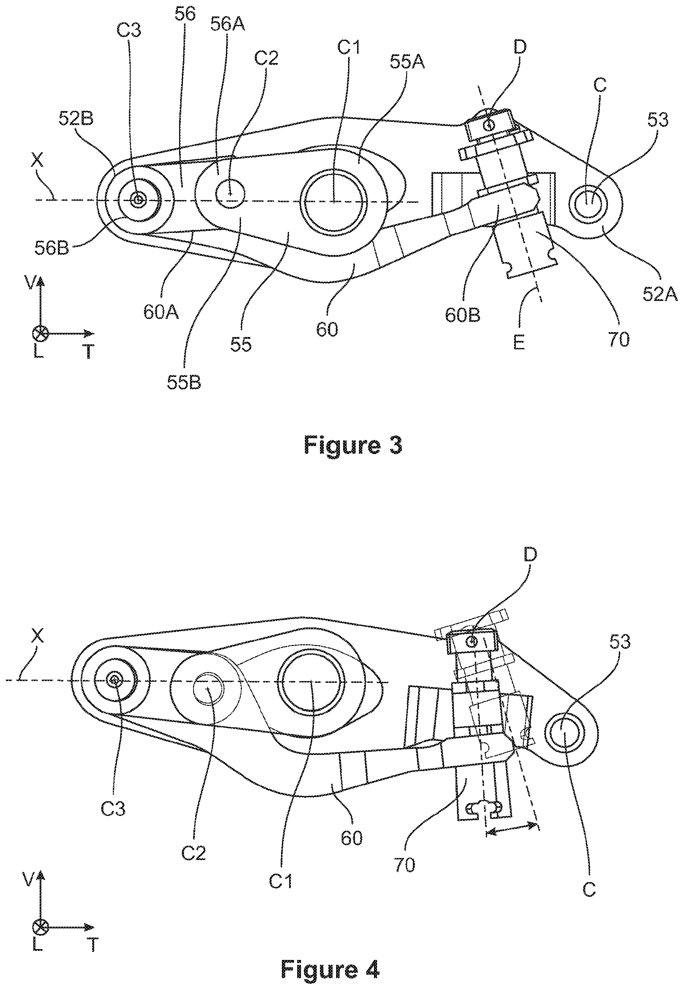

Le mécanisme à trois points 54 est mobile entre une position de verrouillage ou verrouillée (figures 3, 14 et 15) dans laquelle le crochet 42 coopère à retenue avec la boucle 53 dans une position fermée des capots 24, 26 et une position de déverrouillage ou déverrouillée (figures 4, 11 à 13) dans laquelle le crochet 42 est dégagé de la boucle 53 et autorise une ouverture des capots 24, 26.

Dans la position de déverrouillage illustrée notamment sur la figure 4, le mécanisme à trois points 54 est tel que les trois axes C1, C2 et C3 sont désalignés par rapport à une ligne notée X dite ligne d'alignement des efforts selon laquelle les trois axes C1, C2 et C3 sont alignés. Quelle que soit la position du verrou, cette ligne notée X passe par les axes C1 et C3. Plus précisément, dans la position de déverrouillage, l'axe C2 du mécanisme à trois points 54 est au-dessous de la ligne d'alignement des efforts X selon la direction verticale V. En d'autres termes, l'axe C2 du mécanisme à trois points 54 est plus proche de l'extérieur de la nacelle 10 (et des capots 26, 28) que les axes C1 et C3. Au contraire, dans la position de verrouillage représentée notamment sur la figure 3, le mécanisme à trois points 54 est tel que les trois axes C1, C2 et C3 sont également désalignés par rapport à la ligne X d'alignement des efforts de manière à ce que l'axe C2 du mécanisme à trois points 54 est au-dessus de la ligne d'alignement des efforts X selon la direction verticale V. En d'autres termes, l'axe C2 du mécanisme à trois points 54 est plus éloigné de l'extérieur de la nacelle 10 (et des capots 26, 28) que les axes C1 et C3.

Dans l'exemple illustré sur les figures, il est donc nécessaire de fournir un effort, notamment vertical du bas vers le haut sur les figures pour passer le mécanisme à trois points 54 de sa position déverrouillée à sa position verrouillée et inversement.

Bien entendu, selon un autre exemple, l'effort vertical à fournir peut être du haut vers le bas pour passer le mécanisme à trois points 54 de sa position déverrouillée à sa position verrouillée et inversement.

En d'autres termes, selon l'invention, il est nécessaire de fournir un effort pour basculer l'axe C2 d'un côté à l'autre de la ligne X d'alignement des efforts pour passer le mécanisme à trois points 54 de sa position déverrouillée à sa position verrouillée et inversement.

Le système à verrou 30 comporte en outre une poignée d'actionnement 60 du mécanisme à trois points 54 permettant de déplacer de manière réversible le mécanisme à trois points 54 entre la position de verrouillage (figure 3) et la position de déverrouillage (figure 4) en basculant l'axe C2 d'un côté ou de l'autre de la ligne X. Cette poignée est davantage visible sur les figures 3 et 4 représentatives d'une vue en coupe du verrou à trois points 51 selon un plan transversal (selon les directions V et T indiquées sur les figures), agencé au milieu des parois latérales du support du verrou à trois points, respectivement les positions de verrouillage et de déverrouillage du mécanisme à trois points 54.

La poignée d'actionnement 60 est mobile entre deux positions : une première position correspondant à la position de verrouillage du mécanisme à trois points 54 (figure 3) et une deuxième position correspondant à la position de déverrouillage du mécanisme à trois points 54 (figure 4). Par la suite, on appellera également position de verrouillage ou verrouillée la première position de la poignée, et position de déverrouillage ou déverrouillée la deuxième position de la poignée.

La poignée d'actionnement 60 est mobile en rotation autour de l'axe C3 à une première extrémité 60A. En d'autres termes, la poignée d'actionnement 60 peut être manipulée pour la basculer de manière réversible entre les positions verrouillée et déverrouillée.

En outre, l'axe C2 du mécanisme à trois points 54 est solidaire de la poignée d'actionnement 60. A cet effet, la poignée d'actionnement comporte un orifice de passage de l'axe central C2 du mécanisme à trois points 54.

De ce fait, la première extrémité 60A est solidaire et reliée à la deuxième biellette 56 du mécanisme à trois points 54.

En variante, la deuxième biellette 56 et la poignée d'actionnement 60 sont formées d'un seul bloc, c'est-à-dire en continuité de matière.

Ainsi, le basculement de la poignée d'actionnement 60 de la position verrouillée (figure 3) à la position déverrouillée (figure 4) permet de manœuvrer le mécanisme à trois points 54 en entrainant l'axe C2du mécanisme à trois points 54 d'une position dans laquelle il est au-dessus/d'un côté de la ligne X d'alignement des efforts à une position dans laquelle il est au-dessous/de l'autre côté de la ligne X d'alignement des efforts.

La poignée d'actionnement 60 comporte une douille de verrouillage 70 solidaire d'une deuxième extrémité 60B opposée à la première extrémité 60A.

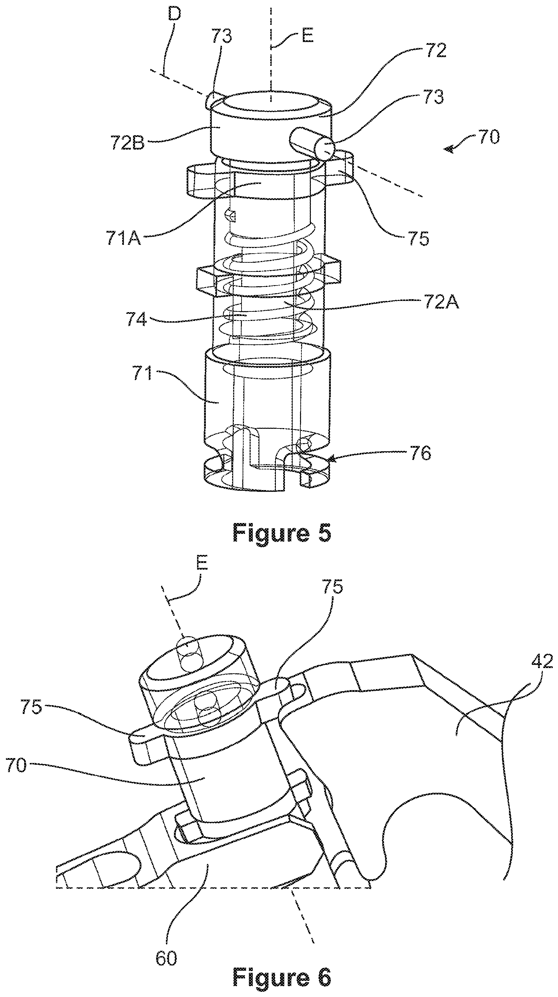

La douille de verrouillage 70 est représentée en transparence partielle sur la figure 5.

La douille de verrouillage 70 est montée pivotante autour d'un axe D par rapport au support 52 du verrou à trois points 50 entre une première position extrême lorsque le mécanisme à trois points 54 est dans la position de verrouillage (figure 3) et une deuxième position extrême lorsque le mécanisme à trois points est dans la position de déverrouillage (figure 4).

L'axe D de pivotement de la douille de verrouillage est parallèle aux axes C1, C2, C3 et C.

Les deux positions extrêmes de la douille de verrouillage 70 sont espacées angulairement d'un angle qui dépend de la longueur des biellettes 55, 56 du mécanisme à trois points 54. Ainsi, plus la longueur des biellettes est grande et plus l'angle de pivotement est faible, par exemple sensiblement égal à 5°. De même, plus la longueur des biellettes est courte et plus l'angle de pivotement est important, par exemple sensiblement égal à 45°. De préférence, l'angle de basculement est sensiblement égal à 20°.

La douille 70 comporte un corps 71 sensiblement cylindrique qui s'étend selon un axe longitudinal E et un guide de verrouillage 72 agencé à une première extrémité 71A du corps 71 de la douille.

Le corps 71 de la douille présente une forme générale tubulaire creuse.

Le guide de verrouillage 72 comporte une première portion cylindrique 72A logée dans une cavité formée dans la forme tubulaire creuse du corps de la douille et une deuxième portion cylindrique 72B. La deuxième portion cylindrique 72B présente des dimensions extérieurs supérieures à celles de la première portion cylindrique 72A de sorte que seule la première portion cylindrique 72A du guide de verrouillage 72 est insérée dans le corps 71 de la douille, la deuxième portion cylindrique 72B venant en butée contre la première extrémité 71A.

Le guide de verrouillage 72 comporte deux pions 73 cylindriques s'étendant radialement de manière opposée à partir de la deuxième portion cylindrique 72B de manière à former l'axe D de pivotement de la douille 70.

Le support 52 du verrou trois points 51, en particulier chaque paroi latérale comporte une cavité de réception de la douille 70, cette cavité étant ménagée dans chaque paroi latérale du support, par exemple par usinage. Les parois latérales du support 52 de verrou comporte en outre des orifices agencés en vis-à-vis l'un de l'autre de réception des pions 73 du guide de verrouillage.

Un ressort hélicoïdal 74 est agencé dans la douille 70 entre le corps 71 de la douille et la première portion cylindrique 72A du guide de verrouillage 71.

Avantageusement, la douille de verrouillage comporte au moins un téton de verrouillage 75 s'étendant radialement à partir du corps cylindrique 71 de la douille 70. Les tétons de verrouillage 75 sont conformés pour sécuriser le crochet en le maintenant engagé dans la boucle formant ainsi un verrouillage dit secondaire. Plus précisément, lorsque la douille de verrouillage 70 est en position de blocage, le ou un des tétons de verrouillage 75 est au contact avec le crochet 42 pour maintenir le crochet engagé dans la boucle. Le crochet 42 peut en outre comporter une cavité ouverte de réception du téton de verrouillage 75 de la douille 70.

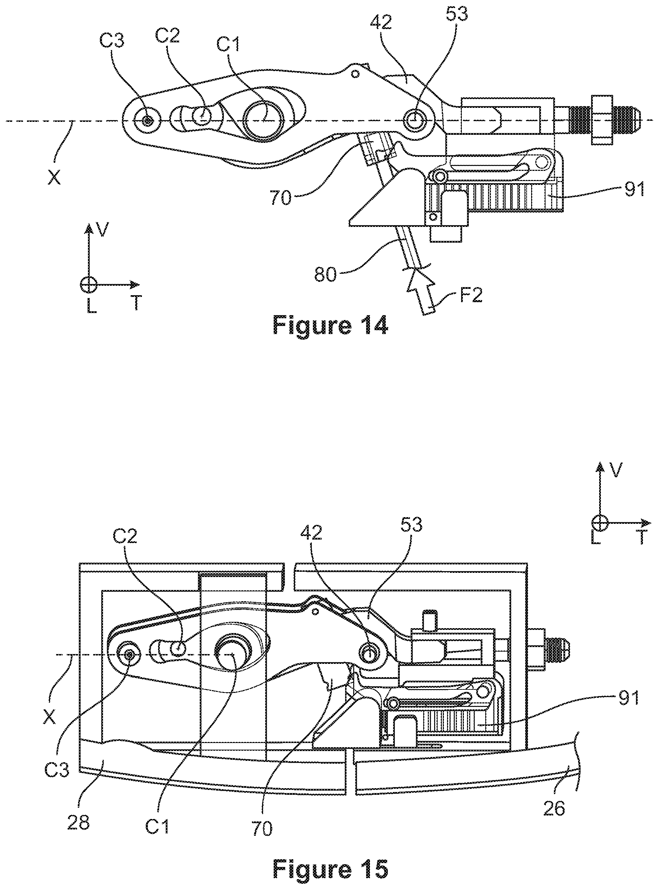

En outre, le système à verrou 30 comporte un outil de blocage 80 adapté pour coopérer avec la douille de verrouillage 70. L'outil de blocage 80 est configuré pour manœuvrer la douille de verrouillage 70 entre une position de blocage (figure 15) et une position de déblocage (figure 14) lorsque la douille de verrouillage 70 est en première position extrême (figure 3). L'outil de blocage 80 est en outre configuré pour interdire une manœuvre de la poignée d'actionnement 60 tant que la douille de verrouillage 70 est dans sa position de blocage.

L'outil de blocage 80 comporte une tige 83 présentant une première extrémité 83A et une deuxième extrémité 83B opposée.

Avantageusement, l'outil de blocage 80 comporte une tête de couplage 81 agencée à l'extrémité 83A de la tige 83. La tête de couplage 81 et la douille de verrouillage 70 sont conformées pour s'accoupler l'une à l'autre tant que la douille de verrouillage 70 n'est pas dans sa position de blocage et pour se désolidariser l'une de l'autre lorsque la douille de verrouillage 70 est dans sa première position extrême (figure 3).

De préférence, l'outil de blocage 80 forme une partie mâle d'un accouplement à baïonnette et la douille de verrouillage 70 forme une partie femelle de l'accouplement à baïonnette. Ainsi, la douille de verrouillage 70 présente un guidage à baïonnette 76 tandis que la tête de couplage 81 de l'outil de blocage 80 présente un insert à baïonnette 84 conformé pour coopérer avec le guidage à baïonnette 76.

Avantageusement, l'outil de blocage 80 peut comporter un témoin de verrouillage 85 agencé à la deuxième extrémité 83B de la tige 83 visible en dehors de la nacelle tant que la tête de couplage 81 et la douille de verrouillage 70 sont accouplées l'une à l'autre. Par exemple, le témoin de verrouillage 85 est un fanion ou un ruban visible facilement de l'extérieur de la nacelle lorsque le système à verrou 30 est déverrouillé ou verrouillé mais non bloqué, en d'autres termes lorsque la douille de verrouillage 70 est dans sa position débloquée. Le témoin ne peut être retiré que lorsque le système à verrou 30 est verrouillé et bloqué, en d'autres termes lorsque la douille de verrouillage 70 est dans sa position de blocage.

A cet effet, le support 41 du crochet 42 comporte avantageusement une platine 86 conformée pour s'étendre dans un plan transversal au crochet 42. La platine 86 est solidaire du support 41 et comporte un orifice 87 traversant conformé pour recevoir l'outil de blocage 80. L'orifice 86 traversant est conformé pour autoriser le retrait de l'outil de blocage uniquement lorsque la douille de verrouillage 70 est dans sa position de blocage.

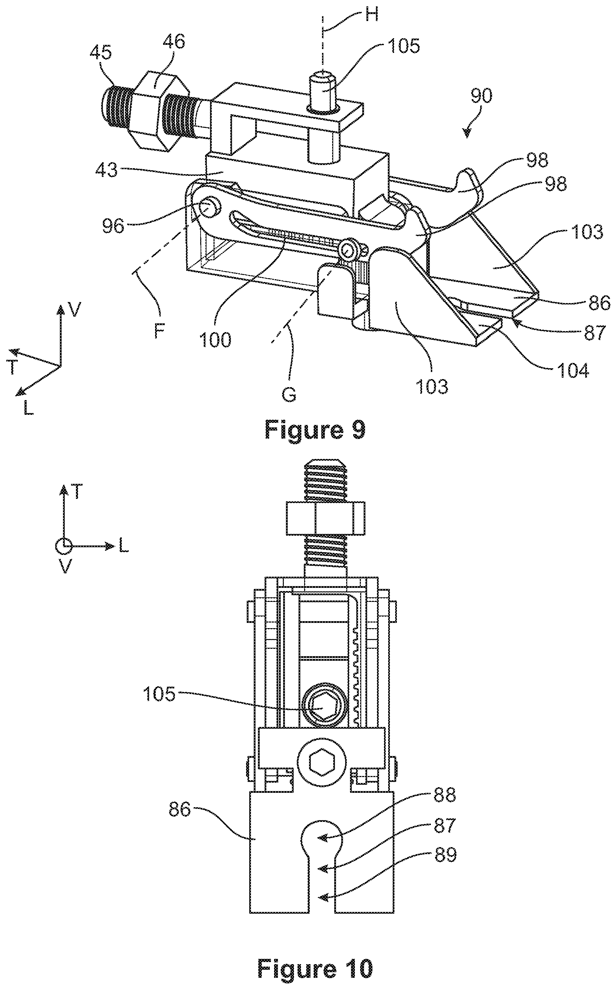

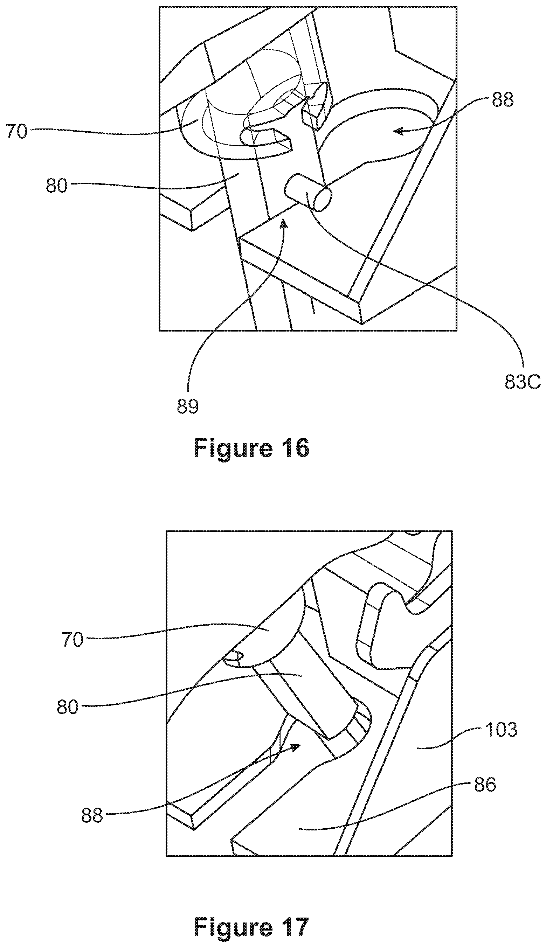

Dans l'exemple illustré et notamment sur les figures 10, 16 et 17, l'orifice traversant 87 comporte une partie circulaire 88 dont les dimensions autorisent le passage de l'outil de blocage 80 et en particulier de sa tête de couplage 81 (figure 17) et une partie sensiblement rectangulaire 89 de dimensions plus petites que celles de la partie circulaire 88 de sorte à empêcher le retrait de l'outil de blocage 80 (figure 16).

A cet effet, la tige 83 de l'outil de blocage présente au moins un méplat, c'est-à-dire qu'elle présente une section non circulaire afin d'empêcher la rotation de l'outil de blocage lorsque celui-ci est dans la partie sensiblement rectangulaire 89 de l'orifice traversant 87. De préférence, la section de la tige 83 présente deux côtés plats opposés reliés entre eux par deux portions arrondies telle qu'illustrée sur la figure 17.

En outre, la tige 83 de l'outil de blocage peut avantageusement comporter des pions 83C s'étendant perpendiculairement à partir de la tige et notamment à partir des côtés plats de la tige et conformés pour empêcher le retrait de l'outil de blocage 80 par la partie sensiblement rectangulaire 89 et autoriser le retrait de l'outil de blocage 80 par la partie circulaire 88 (figure 10).

Dans l'exemple illustré, l'orifice traversant 87 est ouvert à l'extrémité de la platine 86. Alternativement, l'orifice traversant peut être fermé. Dans ce cas, la longueur de la partie rectangulaire 89 de l'orifice traversant 87 est conformée pour autoriser le débattement angulaire de l'outillage.

Le système à verrou peut en outre avantageusement comporter un système de rapprochement configuré pour rapprocher le deuxième capot par rapport au premier capot pour la fermeture des capots.

Dans l'exemple illustré sur les figures, le système à verrou 30 comporte effectivement un tel un système de rapprochement 90.

Le système de rapprochement 90 tel qu'illustré comporte un coulisseau 91 à crémaillère mobile en translation par rapport au support du crochet 42 en direction du deuxième capot 28. Le coulisseau 91 est mobile en translation selon la direction transversale T.

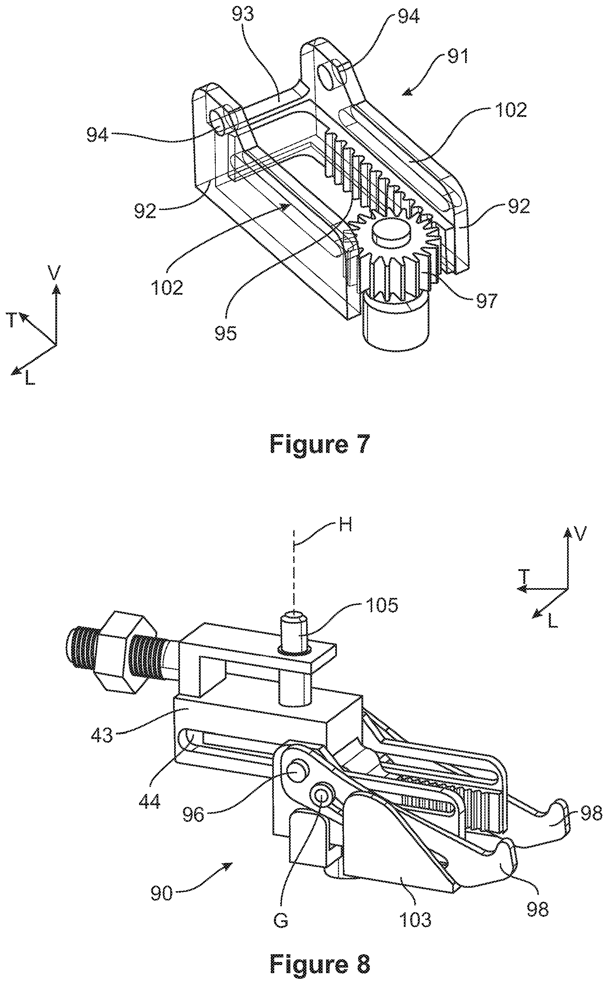

En référence à la figure 7, le coulisseau 91 comporte deux parois latérales 92 parallèles reliées par une paroi centrale 93. Les parois latérales 92 du coulisseau s'étendent dans des plans transversaux. La paroi centrale 93 est perpendiculaire aux parois latérales 92. Les parois latérales 92 comportent des orifices 94 circulaires traversants agencés en vis-à-vis l'un de l'autre et destiné à loger un axe F de guidage du coulisseau et des crémaillères 95 agencées en regard l'une de l'autre.

Le support 41 du crochet 42 comportent en outre deux parois latérales 43 parallèles l'une de l'autre s'étendant également dans des plans transversaux. Les parois latérales 43 du support 41 présentent chacune une lumière 44 de guidage du coulisseau 91.

Une goupille 96 formant l'axe de guidage du coulisseau traverse successivement l'orifice 94 circulaire d'une paroi latérale 92 du coulisseau, la lumière 44 de guidage d'une paroi latérale 43 du support 41 de crochet, la lumière 44 de guidage de l'autre paroi latérale 43 du support 41 de crochet et l'orifice 94 circulaire de l'autre paroi latérale 92 du coulisseau 91.

Le système de rapprochement 90 comprend en outre un pignon de commande 97 conformé et configuré pour engrener avec les crémaillères 95 du coulisseau 91 entrainant la translation de celui-ci entre une position avancée dans laquelle les capots 26, 28 sont éloignés l'un de l'autre (figure 8) et une position reculée dans laquelle les capots 26, 28 sont rapprochés l'un de l'autre autorisant une position fermée des capots (figure 9).

Le pignon de commande 97 peut être manœuvré manuellement ou par un moteur électrique.

De plus, le système de rapprochement 90 comprend au moins un crochet auxiliaire 98 arrangé sur le coulisseau 91 à crémaillère. De préférence et tel qu'illustré sur les figures, le système de rapprochement 90 comporte deux crochets auxiliaires 98 agencés de part et d'autre du crochet principal 42.

Le ou chaque crochet auxiliaire 98 est configuré pour coopérer à retenue avec la boucle 53 pendant le rapprochement des capots 26, 28.

Chaque crochet auxiliaire 98 est mobile en rotation autour de l'axe F de guidage du coulisseau et présente de ce fait un trou de passage de la goupille 96.

En outre, chaque crochet auxiliaire 98 présente une fente 100 traversante pour guider le mouvement du crochet auxiliaire recevant un axe G de basculement du crochet secondaire.

Chaque paroi latérale 92 du coulisseau 91 comporte une lumière 102 de guidage des crochets auxiliaires 98.

Cet axe G de basculement peut être formé d'une autre goupille 101 traversant les fentes de guidage 100 des crochets auxiliaires 98 et des lumières 102 de guidage des parois latérales 92 du coulisseau 91.

Avantageusement, la platine 86 du support 41 comporte deux parois 103 s'étendant perpendiculairement à une portion centrale 104 dans laquelle l'orifice traversant 87 pour le passage de l'outil de blocage 80 est ménagé. Chaque paroi 103 de la platine 86 s'étend dans un plan transversal, c'est-à-dire parallèlement aux crochets auxiliaires 98, aux parois latérales 92 du coulisseau et aux parois latérales 43 du support 41 de crochet. Le système de rapprochement 90 est conformé de sorte que chaque crochet auxiliaire 98 est agencé entre une paroi latérale 92 du coulisseau et une paroi 103 de la platine 86, la paroi 103 de la platine 86 formant de ce fait un guide du crochet auxiliaire 98.

Un tel système de rapprochement 90 utilisant un pignon de commande actionnant une crémaillère permet d'être plus facilement manœuvré par un moyen électrique par exemple que les systèmes actuels.

Un tel système de rapprochement permet une augmentation des capacités de rapprochement par rapport à la solution actuelle. Cette capacité de rapprochement est définie par la course de la crémaillère et par la longueur des crochets auxiliaires.

Dans l'exemple illustré sur les figures, le système de verrou comporte en outre une vis de sécurité 105 d'axe longitudinal H, sensiblement vertical, configurée pour solidariser le crochet principal 42 à son support 41 de manière à être facilement démontable en cas de grippage du verrou ou d'un dysfonctionnement/endommagement empêchant une manœuvre du verrou.

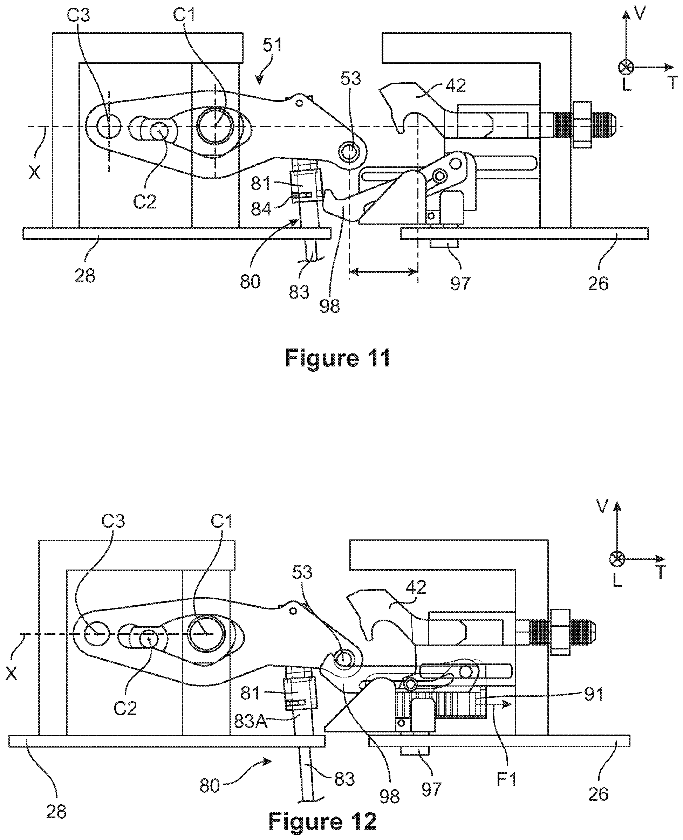

Le fonctionnement du verrou va maintenant être détaillé en regard des figures 11 à 15.

Les figures 11 à 13 illustrent des phases successives de rapprochement des premiers et deuxième capots 26, 28, grâce au système de rapprochement 90.

Le système à verrou 30 est déverrouillé et les capots sont ouverts.

Dans la première phase d'approche illustré sur la figure 11, le système de rapprochement 90 est dans une configuration dans laquelle le coulisseau à crémaillère 91 est dans sa position avancée et de ce fait les crochets auxiliaires 98 sont inclinés vers le bas.

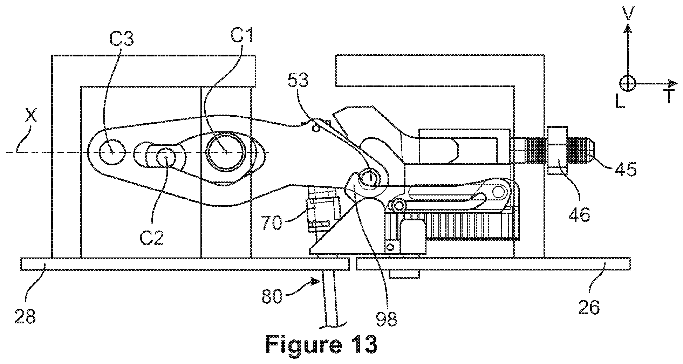

La rotation du pignon de commande 97 (figure 12) dans un sens entraine l'engrènement des dents de celui-ci avec les crémaillères 95 du coulisseau à crémaillère 91 provoquant le passage du coulisseau à crémaillère 91 d'une position avancée (figure 11) vers une position reculée (figure 13).

L'engrènement du pignon de commande 97 avec les crémaillères 95 du coulisseau à crémaillère 91 provoque une translation du coulisseau 91 et des crochets auxiliaires 98 selon la direction transversale dans le sens de la flèche F1. L'axe F de guidage du coulisseau 91 supportant les crochets secondaires 98 coulissent dans les lumières 44 de guidage du support 41 du crochet principal 42. La translation des crochets auxiliaires 98 dans le sens de la flèche F1 provoque leur basculement vers le haut autour de leur axe de pivotement F et les rapproche de ce fait de la boucle 53 jusqu'à ce qu'ils coopèrent à retenue avec la boucle 53.

La translation du coulisseau 91 dans le sens de la flèche F1 permet ainsi de rapprocher le deuxième capot 28 par rapport au premier capot 26 pour la fermeture des capots.

Dans la position extrême reculée représentée sur la figure 13, les capots sont en position de fermeture autorisant le verrouillage du verrou puisque les crochets auxiliaires 98 toujours engagés avec la boucle ont rapproché au maximum la boucle 53 du crochet 42 principal permettant le verrouillage du verrou.

Dans cette configuration, l'outil de blocage 80 est engagé dans la douille de verrouillage 70 et est inséré dans la partie sensiblement rectangulaire 89 de l'orifice 87 ménagé dans la platine 86 du support du crochet 42 par le rapprochement des deux capots.

En outre, le verrou à trois points est dans sa position déverrouillée, de ce fait l'axe C2 du mécanisme à trois points 54 est dans une position dans laquelle il est au-dessous de la ligne X d'alignement des efforts.

Pour verrouiller le système à verrou, l'outil de blocage 80 est déplacé dans l'axe de la douille de verrouillage 70 vers le guide de verrouillage (flèche F2) de manière à faire passer l'axe C2 du mécanisme à trois points 54 au-dessus de la ligne X d'alignement des efforts. Le mécanisme à trois points 54 est dans sa position verrouillée.

Ce mouvement permet au crochet 42 de coopérer à retenue avec la boucle 53.

Ce mouvement de l'outil de blocage 80 entraine simultanément le pivotement de la douille de verrouillage autour de l'axe D de sa deuxième position extrême (figure 4) vers sa première position extrême (figures 3 et 14) et par conséquent le déplacement de l'outil de blocage 80, toujours accouplé avec la douille de verrouillage 70, dans la partie sensiblement circulaire 88 de l'orifice 87 ménagé dans la platine 86 du support du crochet 42.

Dans cette première position extrême de la douille de verrouillage 70 illustrée sur la figure 14, une rotation de l'outil de blocage 80 autour de son axe longitudinal est autorisée et entraine le passage de la douille de verrouillage 70 de sa position de déblocage à sa position de déblocage illustrée sur la figure 15, dans laquelle l'outil de blocage 80 a été détaché de la douille de verrouillage 70 et retirer par la partie sensiblement circulaire 88 de l'orifice 87 ménagé dans la platine 86 du support du crochet 42.

De ce fait le témoin accroché à l'outil de blocage 80 ne dépasse plus des capots de la nacelle assurant que les capots sont fermés et le verrou verrouillé et bloqué.

## Revendications

1. Système à verrou (30) pour nacelle de turbomachine comprenant un premier et un deuxième capots (26, 28), le système à verrou comprenant :
- un support (41) destiné à être fixé au premier capot et supportant un crochet (42) dit crochet principal ;
- un verrou à trois points (51) destiné à être fixé au deuxième capot, comportant un support (52), un étrier (53) solidaire du support et un mécanisme à trois points (54) articulé en un point du support, le mécanisme à trois points étant mobile entre une position de verrouillage dans laquelle le crochet coopère à retenue avec l'étrier dans une position fermée des capots et une position de déverrouillage dans laquelle le crochet est dégagé de l'étrier et autorise une ouverture des capots ;
- une poignée d'actionnement (60) du mécanisme à trois points (54) entre les positions de verrouillage et de déverrouillage, la poignée d'actionnement (60) ayant une première extrémité (60A) reliée au mécanisme à trois points ;
la poignée d'actionnement comportant une douille de verrouillage (70) solidaire d'une deuxième extrémité (60B) opposée à la première extrémité, la douille étant montée pivotante par rapport au support du verrou à trois points entre une première position extrême lorsque le mécanisme à trois points est dans la position de verrouillage et une deuxième position extrême lorsque le mécanisme à trois points est dans la position de déverrouillage, le système à verrou comportant un outil de blocage (80) adapté pour coopérer avec la douille de verrouillage (70) et configuré pour manœuvrer la douille de verrouillage entre une position de blocage et une position de déblocage lorsque la douille de verrouillage est en première position extrême, et pour interdire une manœuvre de la poignée d'actionnement (60) tant que la douille de verrouillage (70) est dans sa position de blocage.

2. Système à verrou selon la revendication 1, dans lequel l'outil de blocage (80) comporte une tête de couplage (81) agencée à une extrémité d'une tige (83), la tête de couplage et la douille de verrouillage étant conformées pour s'accoupler l'une à l'autre tant que la douille de verrouillage (70) n'est pas dans sa position de blocage et pour se désolidariser l'un de l'autre lorsque la douille de verrouillage (70) est dans sa première position extrême.

3. Système à verrou selon la revendication 2, dans lequel l'outil de blocage (80) forme une partie mâle d'un accouplement à baïonnette et la douille de verrouillage (70) forme une partie femelle de l'accouplement à baïonnette.

4. Système à verrou selon la revendication 2 ou 3, dans lequel l'outil de blocage (80) comporte un témoin de verrouillage (85) visible en dehors de la nacelle tant que la tête de couplage (81) et la douille de verrouillage (70) sont accouplées l'une à l'autre.

5. Système à verrou selon l'une des revendications précédentes, dans lequel la douille de verrouillage (70) comporte un corps cylindrique (71) et un téton de verrouillage (75) s'étendant radialement à partir du corps cylindrique, le téton de verrouillage est configuré pour maintenir le crochet (42) engagé dans l'étrier (53) quand la douille de verrouillage est en position de blocage.

6. Système à verrou selon l'une des revendications précédentes, comprenant un système de rapprochement (90) configuré pour rapprocher le deuxième capot (28) par rapport au premier capot (26) pour la fermeture des capots.

7. Système à verrou selon la revendication précédente, dans lequel le système de rapprochement comporte :
- un coulisseau (91) à crémaillère mobile en translation par rapport au support du crochet en direction du deuxième capot ;
- au moins un crochet auxiliaire (98) arrangé sur le coulisseau à crémaillère et configuré pour coopérer à retenue avec l'étrier pendant le rapprochement des capots ; et
- un pignon de commande (97) configuré pour engrener avec la crémaillère du coulisseau à crémaillère entrainant la translation de celui-ci entre une position avancée dans laquelle les capots sont éloignés l'un de l'autre et une position reculée dans laquelle les capots sont rapprochés l'un de l'autre autorisant une position fermée des capots.

8. Système à verrou selon la revendication précédente, dans lequel le système de rapprochement (90) comporte deux crochets auxiliaires (98) agencés de part et d'autre du crochet principal.

9. Système à verrou selon l'une quelconque des revendications précédentes, dans lequel le support du crochet comporte une platine conformée pour s'étendre dans un plan transversal au crochet, la platine comportant un orifice traversant conformé pour recevoir l'outil de blocage, l'orifice traversant étant conformé pour autoriser le retrait de l'outil de blocage uniquement lorsque la douille de verrouillage est dans sa position de blocage.

10. Nacelle de turbomachine comprenant un premier capot, un deuxième capot, et un système à verrou selon l'une quelconque des revendications précédentes, le support supportant le crochet étant fixé au premier capot et le verrou trois points étant fixé au deuxième capot, le système à verrou étant conformé pour verrouiller les capots en position fermée lorsqu'il occupe une configuration de verrouillage et pour permettre l'ouverture des capots lorsqu'il occupe une configuration de déverrouillage.

## Patentansprüche

1. Verriegelungssystem (30) für Turbotriebwerksgondel, umfassend eine erste und eine zweite Abdeckung (26, 28), wobei das Verriegelungssystem umfasst:
- eine Stütze (41), die dazu vorgesehen ist, an der ersten Abdeckung befestigt zu werden und einen als Hauptgreifer bezeichneten Greifer (42) stützt;
- eine Dreipunktverriegelung (51), die dazu vorgesehen ist, an der zweiten Abdeckung befestigt zu werden, eine Stütze (52), einen mit der Stütze fest verbundenen Bügel (53) und einen an einem Stützpunkt angelenkten Dreipunktmechanismus (54) umfasst, wobei der Dreipunktmechanismus zwischen einer Verriegelungsposition, in der der Greifer zurückhaltend mit dem Bügel in einer geschlossenen Position der Abdeckungen zusammenwirkt, und einer Entriegelungsposition, in der der Greifer vom Bügel gelöst ist und eine Öffnung der Abdeckungen ermöglicht, bewegbar ist;
- einen Betätigungsgriff (60) des Dreipunktmechanismus (54) zwischen der Verriegelungs- und der Entriegelungsposition, wobei der Betätigungsgriff (60) ein erstes Ende (60A) aufweist, das mit dem Dreipunktmechanismus verbunden ist;
wobei der Betätigungsgriff eine Verriegelungshülse (70) umfasst, die fest mit einem dem ersten Ende gegenüberliegenden zweiten Ende (60B) verbunden ist, wobei die Hülse in Bezug auf die Stütze der Dreipunktverriegelung schwenkbar zwischen einer äußeren ersten Position, wenn der Dreipunktmechanismus sich in der Verriegelungsposition befindet, und einer äußeren zweiten Position, wenn der Dreipunktmechanismus sich in der Entriegelungsposition befindet, angebracht ist, wobei das Verriegelungssystem ein Sperrwerkzeug (80) umfasst, das dazu angepasst ist, mit der Verriegelungshülse (70) zusammenzuwirken, und konfiguriert ist, um die Verriegelungshülse zwischen einer Sperrposition und einer Entsperrungsposition zu bewegen, wenn die Verriegelungshülse sich in der äußeren ersten Position befindet, und eine Bewegung des Betätigungsgriffs (60) zu verbieten, solange die Verriegelungshülse sich in ihrer Sperrposition befindet.

2. Verriegelungssystem nach Anspruch 1, wobei das Sperrwerkzeug (80) einen Kupplungskopf (81) umfasst, der an einem Ende eines Schafts (83) angeordnet ist, wobei der Kupplungskopf und die Verriegelungshülse dazu angepasst sind, sich aneinander zu kuppeln, solange die Verriegelungshülse (70) sich nicht in ihrer Sperrposition befindet, und sich voneinander zu lösen, wenn die Verriegelungshülse (70) sich in ihrer äußeren ersten Position befindet.

3. Verriegelungssystem nach Anspruch 2, wobei das Sperrwerkzeug (80) ein männliches Teil einer Bajonettkupplung bildet und die Verriegelungshülse (70) ein weibliches Teil der Bajonettkupplung bildet.

4. Verriegelungssystem nach Anspruch 2 oder 3, wobei das Sperrwerkzeug (80) eine Verriegelungsleuchte (85) umfasst, die außerhalb der Gondel sichtbar ist, solange der Kupplungskopf (81) und die Verriegelungshülse (70) aneinander gekuppelt sind.

5. Verriegelungssystem nach einem der vorstehenden Ansprüche, wobei die Verriegelungshülse (70) einen zylindrischen Körper (71) und einen Verriegelungszapfen (75), der sich ausgehend vom zylindrischen Körper radial erstreckt, umfasst, wobei der Verriegelungszapfen konfiguriert ist, um den Greifer (42) im Bügel (53) in Eingriff stehend zu halten, wenn die Verriegelungshülse sich in der Sperrposition befindet.

6. Verriegelungssystem nach einem der vorstehenden Ansprüche, umfassend ein Annäherungssystem (90), das konfiguriert ist, um für den Verschluss der Abdeckungen die zweite Abdeckung (28) an die erste Abdeckung (26) anzunähern.

7. Verriegelungssystem nach dem vorstehenden Anspruch, wobei das Annäherungssystem Folgendes umfasst:
- einen Zahnstangenschieber (91), der in Bezug auf die Stütze des Greifers in Richtung der zweiten Abdeckung translatorisch beweglich ist;
- mindestens einen Hilfsgreifer (98), der auf dem Zahnstangenschieber angeordnet ist und konfiguriert ist, um während der Annäherung der Abdeckungen zurückhaltend mit dem Bügel zusammenzuwirken; und
- ein Steuergetrieberad (97), das konfiguriert ist, um mit dem Zahnstangenschieber in Eingriff zu kommen, wodurch die Verschiebung desselben bewirkt wird zwischen einer vorgeschobenen Position, in der die Abdeckungen voneinander beabstandet sind, und einer zurückgezogenen Position, in der die Abdeckungen aneinander angenähert sind, wodurch eine geschlossene Position der Abdeckungen ermöglicht wird.

8. Verriegelungssystem nach dem vorstehenden Anspruch, wobei das Annäherungssystem (90) zwei Hilfsgreifer (98) umfasst, die beiderseits des Hauptgreifers angeordnet sind.

9. Verriegelungssystem nach einem der vorstehenden Ansprüche, wobei die Stütze des Greifers eine Platine umfasst, die dazu angepasst ist, sich in einer zum Greifer querverlaufenden Ebene zu erstrecken, wobei die Platine ein Durchgangsloch umfasst, das dazu angepasst ist, das Sperrwerkzeug aufzunehmen, wobei das Durchgangsloch dazu angepasst ist, die Entnahme des Sperrwerkzeugs nur dann zu ermöglichen, wenn die Verriegelungshülse sich in ihrer Sperrposition befindet.

10. Turbotriebwerksgondel, umfassend eine erste Abdeckung, eine zweite Abdeckung und ein Verriegelungssystem nach einem der vorstehenden Ansprüche, wobei die Stütze den Greifer, der an der ersten Abdeckung befestigt ist, und die Dreipunktverriegelung, die an der zweiten Abdeckung befestigt ist, stützt, wobei das Verriegelungssystem dazu angepasst ist, die Abdeckungen in der geschlossenen Position zu verriegeln, wenn es eine Verriegelungskonfiguration einnimmt, und die Öffnung der Abdeckungen zu erlauben, wenn es eine Entriegelungskonfiguration einnimmt.

## Claims

1. A lock system (30) for a turbine engine nacelle comprising a first and a second cowls (26, 28), the lock system comprising:
- a support (41) configured to be attached to the first cowl and supporting a hook (42) referred to as the main hook;
- a three-point lock (51) configured to be attached to the second cowl, comprising a support (52), a yoke (53) secured to the support and a three-point mechanism (54) hingedly connected at a point of the support, the three-point mechanism being movable between a locked position wherein the hook cooperates in a retaining manner with the yoke in a closed position of the cowls and an unlocked position wherein the hook is disengaged from the yoke and allows the cowls to be opened;
- an actuating handle (60) for actuating the three-point mechanism (54) between the locked and unlocked positions, the actuating handle (60) having a first end (60A) connected to the three-point mechanism;
the actuating handle comprising a locking bush (70) secured to a second end (60B) opposite the first end, the bush being mounted so as to pivot relative to the support of the three-point lock between a first end position when the three-point mechanism is in the locked position and a second end position when the three-point mechanism is in the unlocked position,
and the lock system comprising a blocking tool (80) adapted to cooperate with the locking bush (70) and configured to maneuver the locking bush between a blocked position and an unblocked position when the locking bush is in its first end position, and to prevent a maneuver of the actuating handle (60) as long as the locking bush (70) is in its blocked position.

2. The lock system as claimed in claim 1, wherein the blocking tool (80) comprises a coupling head (81) arranged at one end of a rod (83), the coupling head and the locking bush being shaped to couple to each other as long as the locking bush (70) is not in its blocked position and to disengage from each other when the locking bush (70) is in its first end position.

3. The lock system of claim 2, wherein the blocking tool (80) forms a male part of a bayonet coupling and the locking bush (70) forms a female part of the bayonet coupling.

4. The lock system according to claim 2 or 3, wherein the blocking tool (80) comprises a locking indicator (85) visible outside the nacelle as long as the coupling head (81) and the locking bush (70) are coupled together.

5. The lock system according to any of the preceding claims, wherein the locking bush (70) comprises a cylindrical body (71) and a locking nipple (75) extending radially from the cylindrical body, the locking nipple is configured to hold the hook (42) in engagement with the yoke (53) when the locking bush is in the blocked position.

6. The lock system according to one of the preceding claims, comprising a take-up system (90) configured to take the second cowl (28) up to the first cowl (26) in order to close the cowls.

7. The lock system according to the preceding claim, wherein the take-up system comprises:
- a rack slide (91) which may be moved in translation relative to the support of the hook in the direction of the second cowl;
- at least one auxiliary hook (98) arranged on the rack slide and configured to cooperate in a retaining manner with the yoke when the cowls are taken-up; and
- a control pinion (97) configured to mesh with the rack of the rack slide, causing the latter to move in translation between an advanced position wherein the cowls are moved away from each other and a retracted position wherein the cowls are taken-up towards each other, allowing the cowls to be closed.

8. The lock system as claimed above, wherein the take-up system (90) comprises two auxiliary hooks (98) arranged on either side of the main hook.

9. The lock system according to any one of the preceding claims, wherein the support of the hook comprises a plate shaped to extend in a plane transverse to the hook, the plate comprising a through orifice shaped to receive the blocking tool, the through orifice being shaped to allow the removal of the blocking tool only when the locking bush is in its blocked position.

10. A turbine engine nacelle comprising a first cowl, a second cowl, and a lock system according to any one of the preceding claims, the support supporting the hook being attached to the first cowl and the three-point lock being attached to the second cowl, the lock system being shaped to lock the cowls in the closed position when it occupies a locking configuration and to allow the cowls to be opened when it occupies an unlocking configuration.
